# EUROPEAN PATENT APPLICATION

(11) **EP 1 874 069 A1**
(43) Date of publication of application: **02.01.2008**
(21) Application number: 07110940.9
(22) Date of filing: 25.06.2007
(51) Int. Cl.: H04Q 7/32

(54) **Method for tracking a lost mobile station**

(30) Priority: 26.06.2006 KR 20060057692; 20.06.2007 KR 20070060643
(71) Applicant: Samsung Electronics Co., Ltd., Suwon-si, Gyeonggi-Do (KR)
(72) Inventor: Jang, Ki-Tae, Gyeonggi-do (KR); Kim, Yong-Joon, Gyeonggi-do (KR); Kim, Kyoung-Taek, Gyeonggi-do (KR); Kim, Yong-Tae, Gyeonggi-do (KR); Kim, Min-Sung, Gyeonggi-do (KR)
(74) Representative: Grünecker, Kinkeldey, Stockmair & Schwanhäusser Anwaltssozietät

(57) **Abstract**

Provided is a method for tracking a lost mobile station. The method includes, when a replacement Subscriber Identity Module (SIM) card is installed , determining whether the replacement SIM card is registered as a licensed replacement SIM card; when the SIM card is not registered, transmitting a previously stored tracking short message to a preset destination; and upon receipt of a tracking response short message, setting a tracking lock mode for limiting a use of some functions of the mobile station.

## Description

### BACKGROUND OF THE INVENTION

### 1. Field of the Invention

The present invention relates generally to a mobile station, and in particular, to a method for tracking a mobile station when the mobile station is lost.

### 2. Description of the Related Art

In general, when a subscriber is identified, a Serving General Packet Radio Service (GPRS) Support Node (SGSN) or a Mobile services Switching Center (MSC) transmits a subscriber identity request to a mobile station. In response to this, the mobile station transmits a subscriber identity response to one of the SGSN and the MSC. When one of the SGSN and the MSC decides to check an International Mobile Equipment Identity (IMEI) for an Equipment Identity Register (EIR), transmits a check IMEI to the EIR. The EIR responds to one of the SGSN and the MSC by a check IMEI Acknowledgement.

A conventional mobile communication system attempts the following method to track the lost mobile station using the above identity process. An owner of the mobile station manually reports a loss to a service provider. Accordingly, the service provider requests all the mobile stations connecting to a network through the mobile communication system, to provide the IMEIs, and compares the IMEIs received from the mobile stations with IMEIs stored in the EIR. If the mobile communication system checks the IMEI of the lost mobile station as the comparison result, it takes action on the mobile station transmitting the IMEI.

A conventional method for tracking the lost mobile station detects who uses the lost mobile station. In general, a finder of a lost mobile station uses it after changing a Subscriber Identity Module/Universal Subscriber Identity Module (SIM/USIM) card. Therefore, the conventional method for tracking the mobile station can detect who is presently using the lost mobile station only after satisfying two requirements set forth below.

Foremost, the mobile station owner should provide the IMEI of the lost mobile station to the service provider, or the mobile communication system should store and hold the IMEI of the owner in a database. Further, the lost mobile station should be used in the same service provider's network, and should use the SIM card inserted into the mobile station when it is lost. In a case where the lost mobile station is used in a different service provider's network, or uses a different SIM card, the conventional tracking method cannot track the lost mobile station. Also, the conventional tracking method can only recognize who uses the mobile station, and cannot limit a use of the mobile station.

### SUMMARY OF THE INVENTION

It is, therefore, an object of the present invention to provide a method for tracking a lost mobile station without a user's particular action when the mobile station is lost.

It is another object of the present invention to provide a method for tracking a mobile station, and for limiting a function of the mobile station when the mobile station is lost.

It is a further object of the present invention to provide a method for tracking a mobile station, and for remotely controlling the mobile station when the mobile station is lost.

To achieve the above and other aspects of the present invention, there is provided a method for tracking a lost mobile station. The method includes, upon replacement of a Subscriber Identity Module (SIM) card, determining whether the SIM card is registered as a licensed SIM card; when the SIM card is not registered, transmitting a previously stored tracking short message to a preset destination; and upon receipt of a tracking response short message, setting a tracking lock mode for limiting a use of some functions of the mobile station.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates a construction of a mobile station according to the present invention;
FIG. 2 is a flowchart illustrating a method for operating a mobile station in a tracking lock mode according to the present invention; and
FIG. 3 is a flowchart illustrating a method for operating a mobile station in another tracking lock mode according to the present invention.

### DETAILED DESCRIPTION OF THE PREFERRED EMBODIMENT

A preferred embodiment of the present invention will now be described in detail with reference to the accompanying drawings. In the drawings, the same or similar elements are denoted by the same reference numerals even though they are depicted in different drawings. In the following description, a detailed description of known functions and configurations incorporated herein has been omitted for conciseness.

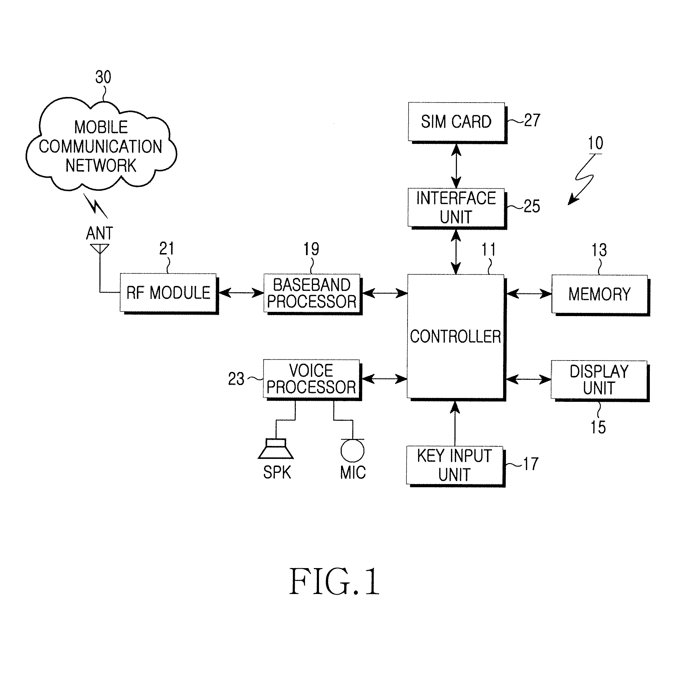

FIG. 1 illustrates a construction of a mobile station 10 according to the present invention. Referring to FIG. 1, the mobile station 10 includes a controller 11, a Subscriber Identity Module (SIM) card 27, an interface unit 25, a memory 13, a display unit 15, a key input unit 17, a voice processor 23, a baseband processor 19, a radio frequency (RF) module 21.

The controller 11 controls and manages a general operation of the mobile station 10.
The display unit 15 displays a variety of image information, and an image received from a base station or stored in the memory 13, on a screen that is controlled by the controller 11.

The key input unit 17 includes a * key, a # key, and a plurality of function keys such as Menu, Select, Call, Cancel, On/Off, Volume, and Camera keys associated with several functions of the mobile station. The key input unit 17 provides key input data associated with a key pressed by a user, to the controller 11. The key input unit 17 includes character keys assigned numerals of 0 to 9 and assigned a plurality of letters or characters, depending on the language used.

The RF module 21 transmits and receives a radio signal with the base station through an antenna. The RF module 21 modulates a transmission signal that is received from the controller 11 through the baseband processor 19, and transmits an RF signal through an antenna. The RF module 21 demodulates an RF signal received through the antenna, and provides the demodulated signal to the controller 11 through the baseband processor 19. The baseband processor 19 processes a baseband signal transmitted and received between the RF module 21 and the controller 11.

The voice processor 23 processes a voice inputted from the controller 11, and outputs the voice to a speaker. The voice processor 23 processes a voice received through a microphone, and outputs the voice to the controller 11.

The SIM card 27 stores user identity information, communication encryption information, and a variety of user information. A mobile equipment is combined with the SIM card 27, thereby constructing one mobile station. The controller 11 sets a session with the SIM card 27, and performs a mobile communication using the information stored on the SIM card 27. In other words, the controller 11 can connect to a mobile communication network using the identity information and the encryption information stored on the SIM card 27, perform the communication, and inquire and use the user information such as one of a phonebook and a short message stored on the SIM card 27. The SIM card 27 is used to separate a function of identity and communication encryption as well as a function of storing the variety of information as set forth above. Thus, one SIM card 27 can be installed and used for several mobile equipments. Alternately, several SIM cards can be installed by replacement and used for one mobile equipment.

The interface unit 25 interfaces the controller 11 with the SIM card 27. The controller 11 sets and unsets the session with the SIM card 27 through the interface unit 25. The controller 11 stores and reads information from the SIM card 27.

The memory 13 stores and provides a process and control program for the controller 11, reference data, and a variety of updateable storage data, to a working memory of the controller 11. The memory 13 stores program data necessary for tracking the mobile station 10 according to the present invention. The memory 13 stores SIM card registration information, a tracking short message, tracking destination information, a tracking remote control code, a remote control password, and a tracking unlock password.

The SIM card registration information is identification information on the SIM card that is licensed to the user. The SIM card registration information is registered using a SIM card registration menu and stored in the memory 13 according to the present invention. In other words, when a new SIM card is combined, the user selects the SIM card registration menu and inputs a predetermined SIM card registration number. If so, the controller 11 stores a personal identification number of the SIM card, as the SIM card registration information. Alternately, after selecting the SIM card registration menu, the user can directly input the SIM card registration number and a personal identification number of an arbitrary SIM card, thereby storing SIM card registration information on the SIM card, and registering the SIM card.

The tracking short message refers to a message for indicating a loss state of the mobile station 10. The tracking short message includes a specific code for indicating the loss state, and address information of the mobile station 10. The controller 11 detects identification information of a newly installed SIM card, and determines whether the newly installed SIM card is registered with the SIM card registration information. When the newly installed SIM card is not the registered SIM card, the controller 11 automatically transmits the tracking short message to a tracking destination.

The tracking destination information is address information on a subject receiving the tracking short message. The tracking destination information can include service provider address information as a default value, and can include other mobile station address information depending on user's setting.

The tracking unlock password refers to a password for releasing a tracking lock mode set to the mobile station 10. The tracking lock mode refers to a mode for limiting some functions of the mobile station, for example, a function of externally outputting the user data, a function using the user data, and a function of transmitting a short message. The tracking lock mode is set when a tracking response short message is received after the tracking short message is transmitted.

The tracking remote control code refers to a control code associated with a variety of remote control commands. The tracking remote control code includes a code for indicating a predetermined remote control command, and a code for indicating that it is a tracking remote control code. The remote control command includes commands associated with all operations executable by the mobile station. The controller 11 transmits a tracking remote control short message, which is a short message including the tracking remote control code, to a remotely controlled mobile station in response to a user's request. The tracking remote control short message includes a remote control password inputted from the user. The remote control password refers to information indicating that there is an authorization for remotely controlling a mobile station receiving the remote control short message, that is, a mobile station to which the tracking lock mode is set. Upon receiving the tracking remote control short message in the tracking lock mode, the controller 11 determines whether the remote control password included in the received tracking remote control short message is consistent with the remote control password stored in the memory 13. If the remote control password is consistent with the stored remote control password, the controller 11 executes an operation associated with the tracking remote control code included in the received tracking remote control short message.

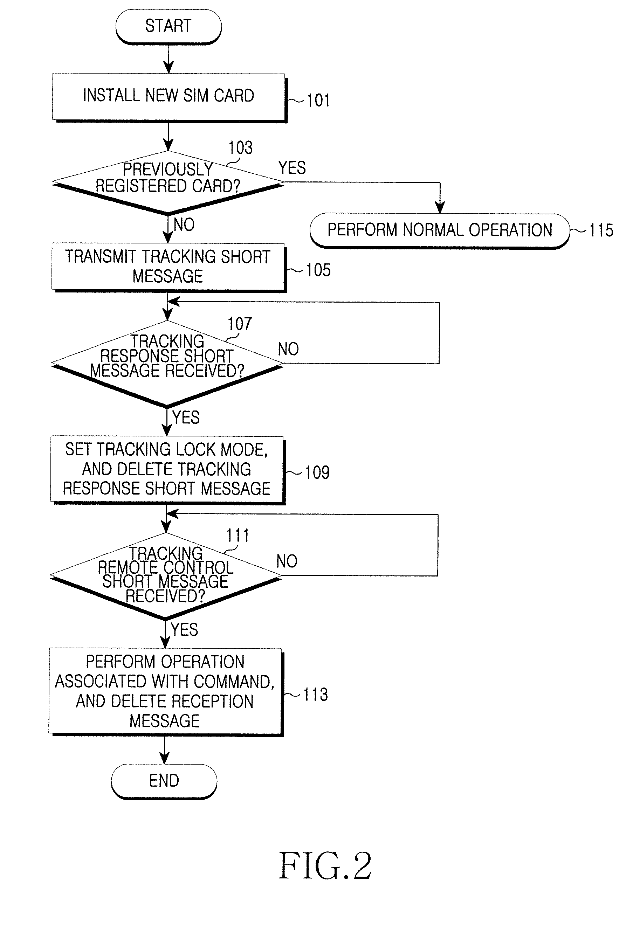

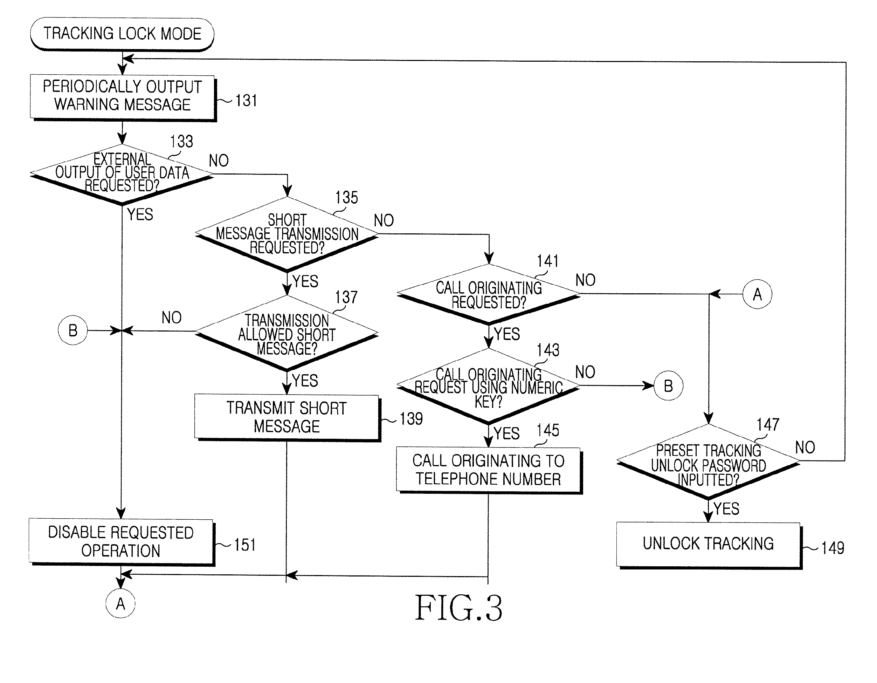

A process of operating the mobile station 10 in the tracking lock mode according to the present invention will be described with reference to FIGs. 2 and 3 below.
The controller 11 of the mobile station 10 in the tracking lock mode stores the SIM card registration information associated with at least one SIM card according to user's input, in the memory 13, and registers the licensed SIM card. Thereafter, when a new SIM card is installed in Step 101 of FIG. 2, the controller 11 determines whether the new SIM card is a previously registered SIM card in Step 103. If the new SIM card is the previously registered SIM card, the controller 11 executes a normal operation in Step 115. Otherwise, the controller 11 proceeds to Step 105. In the Step 105, the controller 11 transmits the tracking short message to a previously registered destination, and proceeds to Step 107. The tracking short message is secretly transmitted. The destination of the tracking short message can be the service provider, and specific mobile stations registered to the tracking destination. In other words, the tracking short message is transmitted without any information that can be recognized by the user of the mobile station 10. Receiving the tracking short message, the service provider transmits the tracking response short message to the mobile station 10 and stores the received tracking short message, The service provider notifies the user of a tracking referring to a previously registered contact. Receiving the tracking response short message in Step 107, the controller 11 proceeds to Step 109, and sets the tracking lock mode and deletes the received tracking response short message.

In other words, when an original user of the mobile station 10 installs the previously registered SIM card by replacement, the mobile station 10 operates normally. However, when the mobile station 10 is lost or stolen, and is equipped with a SIM card not previously registered, the mobile station 10 transmits the tracking short message, receives the tracking response short message in response to the tracking short message, and sets the tracking lock mode. In the tracking lock mode, the mobile station 10 is limited in its function using personal information stored therein, and some of its transmission functions.

The tracking response short message can be distinguished into a non-display tracking response short message and a display tracking response short message according to the present invention. The non-display tracking response short message includes a non-display identification code. The mobile station 10 does not execute any operation that can be recognized by the user of the mobile station 10 in association with a receipt of the non-display tracking response short message. In other words, when the controller 11 receives a general short message, it does not execute an operation for notifying of its receipt, for example, an operation of displaying a tracking response short message incoming image and generating an incoming sound. Alternatively, the display tracking response message includes the display identification code. The mobile station 10 executes the same operation as receiving the general short message when it receives the display tracking response message. The display response identification code can be an arbitrary special character string, and can be included in a data field, not a header field of the short message. In other words, the display tracking response message can be a short message starting with the arbitrary special character string.

After that, when it is determined that the controller 11 receives the tracking remote control short message in Step 111, it detects the remote control password included in the tracking remote control short message. The controller 11 determines whether the previously stored remote control password is consistent with the detected remote control password. When it is determined that the previously stored remote control password is consistent with the detected remote control password, in Step 113, the controller 11 executes an operation associated with the remote control code included in the received tracking remote control short message, and deletes the reception message. The mobile station 10 does not execute any operation for notifying that the tracking remote control message is received.

Thus, the user can remotely control an operation of the lost mobile station 10.

A process of operating the mobile station 10 disabling some functions in the tracking lock mode will be described with reference to FIG. 3 below. The controller 11 of the mobile station 10 periodically outputs a warning message in the tracking lock mode in Step 131. After that, when there is a request for externally outputting the user data in Step 133, the controller 11 disables the external output of the user data in Step 151, and proceeds to Step 147. The user data includes a phonebook, a transmission/reception short message, a multimedia message, an image file, and a music file. The external output includes an output based on a local area communication such as Bluetooth, an infrared communication, and a Universal Serial Bus (USB) cable.

Alternately, when there is a request for transmitting a short message in Step 135, the controller 11 determines whether the short message is a transmission allowed short message in Step 137. The transmission allowed short message refers to a short message that the mobile station 10 itself transmits. The transmission allowed short message excludes a short message newly generated by the user input, and a short message stored as the transmission/reception message. When the short message is the transmission allowed short message, the controller 11 transmits the short message in Step 139. When the short message is not the transmission allowed short message, the controller 11 disables a transmission of the short message in the Step 151.

When there is a call-originating request in Step 141, the controller 11 determines whether a call-originating number is input using a numeric key in Step 143. When it is determined that there is the call-originating request using the numeric key, the controller 11 dials using a corresponding telephone number in Step 145. The controller 11 disables the call originating when there is not the call-originating request using the numeric key, for example, when there is the call-originating request using a previous transmission list, or the call-originating request using phonebook data.

However, when the preset tracking unlock password is input in Step 147, the controller 11 unlocks the tracking in Step 149. The tracking unlock password can be inputted using a specific menu.

As described above, in the present invention, in case where the SIM card is previously registered and then, the original user of the mobile station 10 installs the previously registered SIM card by replacement, the mobile station 10 operates normally. However, when the mobile station 10 is lost or stolen, and is equipped with a SIM card that was not previously registered, the mobile station 10 transmits the tracking short message, and receives the tracking response short message in response to the tracking short message, thereby setting the tracking lock mode. In the tracking lock mode, the mobile station 10 is limited in its function using the personal information stored in the mobile station 10, and some of its transmission functions. The operation of the lost mobile station 10 is remotely controlled using the tracking remote control short message.

As described above, the present invention can provide the method for tracking the lost mobile station without a user's particular action when the mobile station is lost. The present invention can limit the function of the mobile station, and can remotely control the lost mobile station.

While the invention has been shown and described with reference to a certain preferred embodiment thereof, it will be understood by those skilled in the art that various changes in form. In the present invention, for example, if the mobile station 10 receives the tracking short message, the tracking response short message is, automatically or in response to the user' checking, transmitted to the terminal which transmitted the tracking short message. The tracking short message, the tracking response short message, or the tracking remote control short message can be not only a short message format but also a multimedia message format or a message format that can be transmitted through a paging channel of the mobile communication system according to the present invention, and can be also a normal message format used in the mobile communication system. Details may be made therein without departing from the spirit and scope of the invention as defined by the appended claims.

## Claims

1. A method for tracking a lost mobile station (10), the method comprising the steps of:
when a replacement Subscriber Identity Module (SIM) card (27) is installed, determining whether the replacement SIM card (27) is registered as a licensed SIM card;
when the replacement SIM card (27) is not registered, transmitting a previously stored tracking message to a preset destination; and
upon receipt of a tracking response message, setting a tracking lock mode for limiting use of some functions of the mobile station (10).

2. The method of claim 1, further comprising, upon a receipt of a tracking remote control message in the tracking lock mode, executing an operation associated with a remote control code included in the tracking remote control message, if a remote control password included in the tracking remote control message is consistent with a preset remote control password.

3. The method of claim 1 or 2, further comprising releasing the tracking lock mode when a predetermined tracking unlock password is input in the tracking lock mode.

4. The method of claim 3 in combination with claim 2, further comprising deleting the tracking response message and the tracking remote control message.

5. The method of any one of claims 1 to 4, wherein the step of determining whether the replacement SIM card is registered as the licensed replacement SIM card comprises determining whether a personal identification number of the SIM card is included in SIM card registration information previously stored by a user.

6. The method of any one of claims 1 to 5, wherein the preset destination comprises a service provider and a specific mobile station.

7. The method of any one of claims 1 to 6, further comprising periodically outputting a warning message when the tracking lock mode is set.

8. The method of any one of claims 1 to 7, wherein the some functions limited in use includes a function of externally outputting user data.

9. The method of claim 2 or any one of claims 3 to 8 in combination with claim 2, wherein the tracking message, the tracking response message and the tracking remote control message are a short message format.

10. The method of claim 9, wherein the some functions limited in use includes a function of transmitting a short message in addition to the tracking short message.

11. The method of any one of claims 1 to 10, wherein the some functions limited in use includes a function of transmitting the short message to a different origination other than an origination input using a numeric key.

12. The method of claim 8 of any one of claims 9 to 11 in combination with claim 8, wherein the externally outputting of the user data comprises using local area communication.

13. The method of claim 10 or any one of claims 11 to 12 in combination with claim 10, wherein a preset short message incoming notification operation is not executed when the tracking response short message is received.

14. The method of claim 13, further comprising notifying the user of incoming of the tracking response short message in case where the tracking response short message comprises a display identification code comprised of an arbitrary special character string.

15. The method of any one of claims 1 to 14, wherein the tracking message, the tracking response message and the tracking remote control message are a multimedia message format.
